**Europäisches Patentamt**

**European Patent Office**

**Office européen des brevets**

(19)

(11) Veröffentlichungsnummer: **0 042 538 B1**

# (12) EUROPÄISCHE PATENTSCHRIFT

(45) Veröffentlichungstag der Patentschrift:
**29.08.84**

(21) Anmeldenummer: **81104433.8**

(22) Anmeldetag: **10.06.81**

(51) Int. Cl.³: **C 01 B 17/77, B 01 J 8/18**

(54) **Verfahren zur Herstellung von Schwefeltrioxid.**

(30) Priorität: **19.06.80 DE 3022814**

(43) Veröffentlichungstag der Anmeldung:
**30.12.81 Patentblatt 81/52**

(45) Bekanntmachung des Hinweises auf die Patenterteilung:
**29.08.84 Patentblatt 84/35**

(84) Benannte Vertragsstaaten:
**BE CH DE FR GB IT LI NL SE**

(56) Entgegenhaltungen:
**FR - A - 1 395 732**
**US - A - 3 013 773**
**US - A - 3 712 369**

**CHEMICAL ABSTRACTS, Band 57, Nr. 13, 24. Dezember 1962, Spalte 16128a Columbus, Ohio, U.S.A. I.P. MUKHLENOV et al.: "New contact apparatus for the oxidation of sulfur dioxide in a fluidized catalyst bed"**

(73) Patentinhaber: **BAYER AG, Konzernverwaltung RP Patentabteilung, D-5090 Leverkusen 1 Bayerwerk (DE)**

(72) Erfinder: **Becker, Wolf, Dr., An den Buchen 30, D-5000 Köln 80 (DE)**
Erfinder: **Pütz, Günter, Ing. grad., Bismarckstrasse 193, D-5090 Leverkusen 1 (DE)**
Erfinder: **Wieschen, Hermann, Ing. grad., Hufelandstrasse 69, D-5000 Köln 80 (DE)**

**Beschreibung**

Gegenstand der vorliegenden Erfindung ist ein Verfahren zur Herstellung von Schwefeltrioxid nach dem Kontaktverfahren unter der Verwendung der Fließbettechnik, wobei $SO_2$-haltige Gase in einem einstufigen Fließbett aus Kontaktmaterial mit sauerstoffhaltigen Gasen zu Schwefeltrioxid umgesetzt werden und die Kontaktmasse über Wärmetauscher thermostatisiert wird.

Bei der Herstellung von Schwefeltrioxid durch katalytische Oxidation von Schwefeldioxid werden großtechnisch Festbettkontakte verwendet. Dabei werden in bekannter Weise die $SO_2$-haltigen Gase 2- oder 3stufig mit den Katalysatormassen in Berührung gebracht, wobei überwiegend Vanadinoxid-Kontakte zur Anwendung gelangen. Damit die Reaktion mit der notwendigen Geschwindigkeit abläuft, müssen die $SO_2$-haltigen Gase auf Temperaturen von über 400°C vorerhitzt werden. Vor allem bei höherkonzentrierten $SO_2$-haltigen Gasen werden im Verlauf der Umsetzung in Bruchteilen von Sekunden große Energiemengen frei, die in kontrollierbarer Weise abgeführt werden müssen, um eine Überhitzung der Gase sowie auch der Kontaktmassen und Kontaktkessel zu vermeiden. Temperaturen, die 600°C weit überschreiten, sind zu vermeiden, damit keine Schäden an Kontaktmaterial auftreten. Da die optimale berechenbare Gleichgewichtstemperatur in Abhängigkeit vom $SO_2$- und Sauerstoffgehalt der Gase wesentlich tiefer liegt als die vorgenannte Temperatur, ist man bestrebt, in der letzten Kontaktstufe bei möglichst tiefen Temperaturen, d. h. bei ca. 420 bis 460°C zu arbeiten, um einen hohen $SO_2$-Gesamtumsatz zu erzielen. Zur Temperaturregulierung werden die Gase üblicherweise zwischen den einzelnen Stufen durch Wärmetausch gekühlt.

In der DE-C-1 929 388 wird bereits ein Verfahren zur Herstellung von Schwefeltrioxid nach dem Kontaktverfahren unter Anwendung der Wirbelbett-Technik beschrieben, bei dem die Kühlung des Reaktionsraumes durch Einblasen $SO_2$-haltiger Gase mit entsprechend niedriger Temperatur erfolgt.

Aus Chemical Abstracts, Band 57, Nr. 13, 24/ 12/62, Spalte 16/28a ist bekannt, daß Schwefeltrioxid mit einer Ausbeute von 80% in einem wassergekühlten Fließbett erhalten wird bei einer Gaseintrittstemperatur von 360°C.

Aus der FR-A-1 395 732 ist weiterhin ein Fließbett mit Wärmeaustauscher bekannt, in dem $SO_2$-haltige Gase katalytisch zu $SO_3$ umgesetzt werden. Die Höhe dieses Fließbettes beträgt dabei im Ruhestand zwischen 10 cm und 200 cm, der eingesetzte $V_2O_5$-Katalysator weist Korngrößen zwischen 0,04 und 3 mm auf.

Gegenstand der vorliegenden Erfindung ist ein Verfahren zur Herstellung von Schwefeltrioxid nach dem Kontaktverfahren unter der Verwendung der Fließbettechnik, wobei $SO_2$-haltige Gase in einem einstufigen Fließbett aus Kontaktmaterial mit sauerstoffhaltigen Gasen zu Schwefeltrioxid umgesetzt werden und die Kontaktmasse über Wärmetauscher thermostatisiert wird, dadurch gekennzeichnet, daß die Höhe des einstufigen Fließbettes im fluidisierten Zustand ca. 0,1 bis 2 m, die mittlere Korngröße der Kontaktmasse zwischen ca. 0,4 bis 2 mm, die Gasgeschwindigkeit im leeren Reaktorraum zwischen ca. 0,1 bis 0,6 $m_N$/sec, die Geschwindigkeit nach dem Anströmboden vor Berührung mit dem Kontaktkorn kleiner/gleich 9 $m_N$/sec, beträgt, wobei die $SO_2$-haltigen Gase mit einer Temperatur von etwa 20°C bis 700°C und einem Gehalt von bis zu 66,7% Schwefeldioxid zu über 90% zu Schwefeltrioxid umgesetzt werden, die $SO_3$-haltigen Reaktionsgase einer Zwischenabsorption zugeführt und die von Schwefeltrioxid befreiten Gase in einem ein- oder zweistufigen Kontakt weiter umgesetzt werden und zur Thermostatisierung als Kühlmedium Wasserdampf aus einem vom Reaktionsraum getrennt angeordneten, mit siedendem Wasser gefüllten Gleichdruck-Wärmespeicher im Zwangsdurchlauf in mehreren Folgen in den Reaktionsraum geführt, dort überhitzt und jeweils anschließend im Wärmespeicher durch indirekte Verdampfungskühlung rückgekühlt wird, wobei in Wärmespeicher der Wasserdampf auf gleichem Druck gehalten wird, indem die Anzahl der Überhitzungs- und Rückkühlfolgen so gewählt wird, daß das Verhältnis der Summe der Enthalpiedifferenzen der Rückkühlstufen zur Enthalpiedifferenz zwischen Sattdampf und zugeführten Speisewasser mindestens 1,1 beträgt.

Das Verfahren bietet besonders bei Verwendung von Gasen mit hohen Schwefeldioxidgehalten Vorteile, da durch die erfindungsgemäße Thermostatisierung ein fast isothermer Reaktionsablauf erzielt werden kann.

In dem erfindungsgemäßen Verfahren werden die $SO_2$-haltigen Gase zunächst weitgehend, d. h. zu etwa 90% und mehr, in einem Fließbett umgesetzt. Die $SO_2$-haltigen Gase können einen Gehalt von bis zu 66,7% Schwefeldioxid aufweisen. Bei Verarbeitung von Gasen, die beim Verbrennen von Schwefel mit Luft entstehen, wird vorzugsweise ein Schwefeldioxidgehalt von 10 bis 13,5 Vol.-%, besonders bevorzugt von 11,5 bis 12,5 Vol.-%, eingestellt. Bei Konzentration über ca. 13,0 Vol.-% Schwefeldioxid wird Sauerstoff oder mit Sauerstoff angereicherte Luft zugesetzt. Für die erfindungsgemäß erreichten Umsätze von über 90% wird der Sauerstoffüberschuß über die stöchiometrisch benötigte Menge (für die Reaktion: Schwefeldioxid plus Sauerstoff = Schwefeltrioxid) so gewählt, daß er ca 1 bis 10 Vol.-% beträgt. Vorzugsweise wird der Sauerstoffüberschuß um so höher eingestellt, je höher schwefeldioxidhaltig die zu verarbeitenden Gase sind, z. B. bei 12 Vol.-% $SO_2$ ca. 3 Vol.-% Sauerstoffüberschuß, bis 62 Vol.-% Schwefeldioxid ca. 7 bis 8 Vol.-% Sauerstoffüberschuß über die stöchiometrisch benötigte Menge, die dann gleich 100 gesetzt wird.

Bei schwefeldioxidhaltigen Gasen, die aus der Schwefelverbrennung stammen, wird vorzugsweise eine Temperatur zwischen ca. 170°C bis 550°C eingestellt. Wird diesen Gasen zusätzlich Sauerstoff oder mit Sauerstoff angereicherte Luft zugeführt, so können diese Gase auch bei Temperaturen zwischen ca. 0°C bis 170°C in den Katalysereaktor geleitet werden. Die Temperaturen im Fließbett werden zwischen ca. 430 bis 530°C, vorzugsweise 460 bis 500°C, eingestellt. Die Gasgeschwindigkeit im Fließbett soll die einfache bis doppelte Minimumfluidisierungsgeschwindigkeit des Kontaktmaterials betragen. Die Gasgeschwindigkeit im Fließbett liegt, bezogen auf den leeren Reaktor bei 20°C, bei 0,1 bis 0,6 $m_N$/sec, vorzugsweise bei 0,1 bis 0,35 $m_N$/sec. Die Höhe des Wirbelbettes im fluidisierten Zustand wird zwischen 0,1 bis 2 m, vorzugsweise zwischen 0,6 bis 1,3 m eingestellt. Für den Anströmboden wird vorzugsweise eine solche Konstruktion gewählt, daß die Gasgeschwindigkeit an der Stelle, wo das Gas das Kontaktmaterial berührt, nicht höher als 9 m/sec, vorzugsweise nicht höher als 3 bis 4 m/s ec, ist.

Das einzusetzende Katalysatormaterial soll eine mittlere Korngröße zwischen ca. 0,4 bis 2 mm, vorzugsweise 0,7 bis 1,3 mm, aufweisen.

Die Herstellung abriebfester Katalysatorträger für Fließbettreaktionen, die für die $SO_2$-Katalyse geeignet sind, werden z. B. in der DE-A-1 767 754 bzw. DE-C-1 926 564 beschrieben.

Wesentlich verbesserte Katalysatoren werden nach einem bisher nicht veröffentlichten Vorschlag erhalten, wenn bei deren Herstellung auf Basis gefällter Kieselsäure nur so viel Tonmineralien zugesetzt werden, daß der trockene Katalysatorträger maximal 4% $Al_2O_3$, vorzugsweise nicht mehr als 2% $Al_2O_3$, enthält und die Calcination bei Temperaturen von nicht mehr als 600°C, vorzugsweise bei 200 bis 500°C, erfolgt. Dieses Trägermaterial wird dann anschließend ohne vorherige Säurebehandlung mit einer schwach schwefelsauren Lösung von Vanadyloxysulfat getränkt und anschließend getrocknet. Bei diesem Trocknungsprozeß sind Temperaturen von 150 bis 250°C ausreichend. Auf jeden Fall sollen Temperaturbehandlungen des Trägers wie auch des fertigen Kontaktes unterbleiben, die das im Kristallgitter der Tonmineralien enthaltene Aluminium in die Reaktionsform überführen.

Es ist auch möglich, beide Temperaturbehandlungen in einem Schritt zu vereinen, dergestalt, daß das Trägermaterial vor der Tränkung lediglich getrocknet wird und die Härtung dann an dem fertigen Kontakt bei Temperaturen von unter 600°C, bevorzugt bei Temperaturen von 200 bis 500°C erfolgt.

Es werden Katalysatormassen erhalten, die sich sowohl durch ihre hohe Abriebfestigkeit als auch durch ihre gleichbleibende hohe Aktivität bei langzeitigem Gebrauch auszeichnen.

Die Herstellung der Trägermasse kann sowohl nach dem Verfahren der DE-C 1 926 564 als auch nach anderen bekannten Granulierverfahren wie z. B. auf dem Granulierteller erfolgen. Es werden gefällte Kieselsäurefüllstoffe mit einer spezifischen Oberfläche nach BET von 40 bis 80 m²/g verwendet, die vorzugsweise etwa 5 bis 10 Gew.-% Calciumdioxid enthalten. Die Füllstoffmenge wird so bemessen, daß in dem Trägermaterial, bezogen auf wasserfreies Granulat, etwa 20 bis 60 Gew.-%, vorzugsweise 35 bis 50 Gew.-% Füllstoff vorhanden sind. Dieser Füllstoff wird in einem wäßrigen stabilen Kieselsäuresol mit einer spezifischen Oberfläche von 150 bis 450 m²/g nach BET vormischt, wobei die Gelierung in bekannter Weise unter Zugabe von kleinen Mengen hochaktiven Magnesiumoxids erfolgt. Bevorzugt wird hydratisiertes Magnesiumoxid in Mengen von etwa 0,1 bis 3 Gew.-%. Beim Suspendieren des Füllstoffes im Kieselsol oder bei der Granulierung werden Tonmineralien in Mengen von ca. 10 bis 15 Gew.-% zugesetzt. Als Tonmineralien eignen sich z. B. Kaolinit, Montmorilonit, Attapulgit, Bentonit und/oder Kaolin.

Die Granulate werden getrocknet und anschließend entweder bei Temperaturen von nicht oberhalb 600°C, vorzugsweise bei 200 bis 500°C, gehärtet oder nach der Trocknung unmittelbar der Tränkung zugeführt.

Die Tränkung erfolgt mit einer schwefelsauren Lösung von Vanadyloxysulfat, die vorzugsweise nicht über 6 Gew.-%, besonders bevorzugt nicht über 3 Gew.-% freie Schwefelsäure enthält. Die Tränklösung enthält Vanadyloxysulfat, bei dem das Vanadium in der Oxydationsstufe +IV vorliegt. In Mengen von 5 bis 30 Gew.-%, vorzugsweise von 12 bis 23 Gew.-%, und 15 bis 40, vorzugsweise 20 bis 30 Gew.-% Kaliumhydrogensulfat, jeweils bezogen auf die gesamte Lösung. Diese Lösungen lassen sich stark übersättigen, so daß sie sowohl kalt als auch warm auf das Trägermaterial aufgebracht werden können.

Die Konzentrationen von Vanadium und Kalium in der sauren Lösung sind so zu wählen, daß im getrockneten Katalysator ein Molverhältnis von Kalium zu Vanadin von 3 zu 1 bis 2 zu 1 vorliegt, und der Vanadingehalt, berechnet als Vanadinpentoxid 4 bis 9, vorzugsweise 4 bis 6 Gew.-% beträgt.

Als Salze des vierwertigen Vanadins werden Vanadylsalze, vorzugsweise Sulfate, eingesetzt. Für die erfindungsgemäß bevorzugte Herstellung der Tränkelösung in einem einzigen Schritt wird die benötigte Wassermenge vorgelegt, die für die Reduktion und für die Bisulfatzubereitung benötigte Säuremenge zugegeben, anschließend die berechnete Menge Vanadinpentoxid suspendiert und die Lösung daraufhin mit Schwefeldioxid oder schwefeldioxidhaltigem Gas so lange reduziert, bis sämtliches Vanadinpentoxid als Vanadylsulfat ($VOSO_4$) gelöst vorliegt. Anschließend wird bei einer Temperatur von mindestens 40°C, vorzugsweise von 60 bis 90°C, Kaliumsulfat in die saure Lösung eingetragen. Nach beendeter Bisulfatbildung liegt nur ein geringer Schwefelsäureüberschuß vor. Diese Lösung kann sofort zum Tränken des Trägermaterials verwendet werden.

Bevorzugt erfolgt das Tränken im Fließbett. Das Material wird mit einer ausreichenden Fluidisierungsgeschwindigkeit fluidisiert und dann mit der Tränkelösung besprüht. Anschließend erfolgt vorzugsweise eine Nachbehandlung mit warmer Luft (150 bis 300° C), bis das Material keine Feuchtigkeit mehr abgibt.

Insbesondere wenn das Trägermaterial vor dem Tränkprozeß bei Temperaturen bis 600° C, vorzugsweise bei Temperaturen um 400° C, gehärtet wurde, kann es unmittelbar ohne reduzierende Vorbehandlung im Fließbettkontakt für die Oxydation von $SO_2$ zu $SO_3$ verwendet werden. Es zeigt bei den üblichen Betriebstemperaturen von etwa 380 bis 500° C eine wesentlich höhere Aktivität als andere Fließbettkatalysatoren, und weist auch nach mehrjährigem Betrieb noch eine hohe Abriebfestigkeit und eine unveränderte Aktivität auf.

Erfolgt die Härtung nicht vor der Tränkung, kann sie auch im Anschluß an die Tränkung erfolgen.

Mit dem neuen Katalysatormaterial wurden z. B. bei einer Betriebstemperatur des Fließbettes von ca. 470° C und einem Gas, welches 12 Vol.-% Schwefeldioxid enthielt, in einer einzigen Fließbettstufe ein Umsatz von über 93% von Schwefeldioxid zu Schwefeltrioxid erreicht.

Der Anströmboden für das Wirbelbett muß so konstruiert werden, daß einerseits eine gleichmäßige Gasverteilung über den gesamten Boden erreicht wird, andererseits jedoch wenig Energieverlust durch Druckverlust am Boden eintritt. Es hat sich gezeigt, daß bei Fließbetten unter 6 m Durchmesser ein Druckverlust von 0,2 bar ausreichend ist, bei 8 m Durchmesser war ein Druckverlust von 0,3 bar notwendig. Die gleichmäßige Verteilung des Gases über einen Fließbettböden wird z. B. durch eine Vielzahl von Düsenbohrungen im Fließbettboden erreicht.

Der entscheidende Vorteil bei der Verwendung eines Wirbelkontaktes liegt darin, daß die katalytische Reaktion bei definierter, präzise gewählter Temperatur ablaufen kann und Temperaturinhomogenitäten und Überhitzungen durch freigesetzte Reaktionswärme durch entsprechende Wärmetauscher-Einbauten vermieden werden kann.

Die Kontaktmasse wird über ein Rohrregister mittels Wasserdampf und/oder Luft bzw. $SO_2$- oder $SO_3$-haltiger Gase thermostatisiert. Falls die während der Reaktion freigesetzte Wärmemenge größer ist als nötig, um die eintretenden Gase auf die gewünschte Fließbett-Temperatur zu erwärmen, muß über das Register im Fließbett Wärme abgeführt werden. Hierbei hat es sich bewährt, die Registerrohre gleichmäßig im Bett zu verteilen und die Wärme über Wasserdampf und/oder Luft bzw. $SO_2$-haltigen Gasen abzuführen. Vorzugsweise werden die Register von den Gasen von unten nach oben durchströmt, d. h. von der Richtung her im Gleichstrom mit dem Reaktionsgas, um besonders im oberen Teil des Fließbettes keine Temperaturgradienten zwischen Register und Wirbelbettkontakt über 100° C, vorzugsweise nicht über 50° C, auszubilden. Ist es notwendig, sehr große Wärmemengen aus dem Fließbett abzuführen, z. B. bei der Reaktion von Gasen, die heißer sind als die Betriebstemperatur des Fließbettes. Wird mit reinem Sauerstoff oder mit an Sauerstoff angereicherter Luft gearbeitet, wird erfindungsgemäß im unteren Teil des Bettes ein Verdampferregister im Fließbett betrieben. Die aus dem Fließbett z. B. mittels überhitzter Luft oder vorzugsweise überhitztem Wasserdampf abgeführte Wärme kann dann auf einem so hohen Temperaturniveau gewonnen werden, daß in einem weiteren Wärmeaustauscher Überhitzungswärme als Nutzwärme gewonnen werden kann. Wird die Fließbettanlage mit stark schwankenden Gaskonzentrationen betrieben, wie dies z. B. bei Röstanlagen, Spaltanlagen und Abgasverwertungsanlagen der Fall ist, so muß über das Register das Fließbett thermostatisiert werden. In diesem Fall dürfen die durchströmten Einzelrohre im Fließbett nicht zu lang sein, damit die Verweilzeit des heißen Gases in den Rohren bis zum nächsten Abkühlvorgang, z. B. in einer Verdampfertrommel, die Temperaturkonstanz im Fließbett nicht beeinflußt. Reicht die bei Gasgemischen mit niedriger $SO_2$-Konzentration und tiefer Eintrittstemperatur freigesetzte Reaktionswärme nicht aus, um die gewünschte Fließbett-Temperatur aufrecht zu erhalten, so muß das eintretende Gas auf die Temperatur des Fließbettes aufgeheizt werden. Eine solche Thermostatisierung ist über die eingebauten Rohrregister leicht möglich.

Nach einem anderen, bisher nicht veröffentlichten Vorschlag kann die Thermostatisierung wie folgt durchgeführt werden:

Als Kühlmedium wird Wasserdampf aus einem vom Reaktionsraum getrennt angeordneten, mit siedendem Wasser gefüllten Gleichdruck-Wärmespeicher entnommen und im Zwangsdurchlauf in mehreren Folgen in den Reaktionsraum geführt, dort überhitzt und jeweils anschließend im Wärmespeicher durch indirekte Verdampfungskühlung rückgekühlt, wobei im Wärmespeicher der Wasserdampf auf gleichem Druck gehalten wird, indem die Anzahl der Überhitzungs- und Rückkühlfolgen so gewählt wird, daß das Verhältnis der Summe der Enthalpiedifferenzen der Rückkühlstufen zur Enthalpiedifferenz zwischen Sattdampf und zugeführtem Speisewasser mindestens 1,1 beträgt.

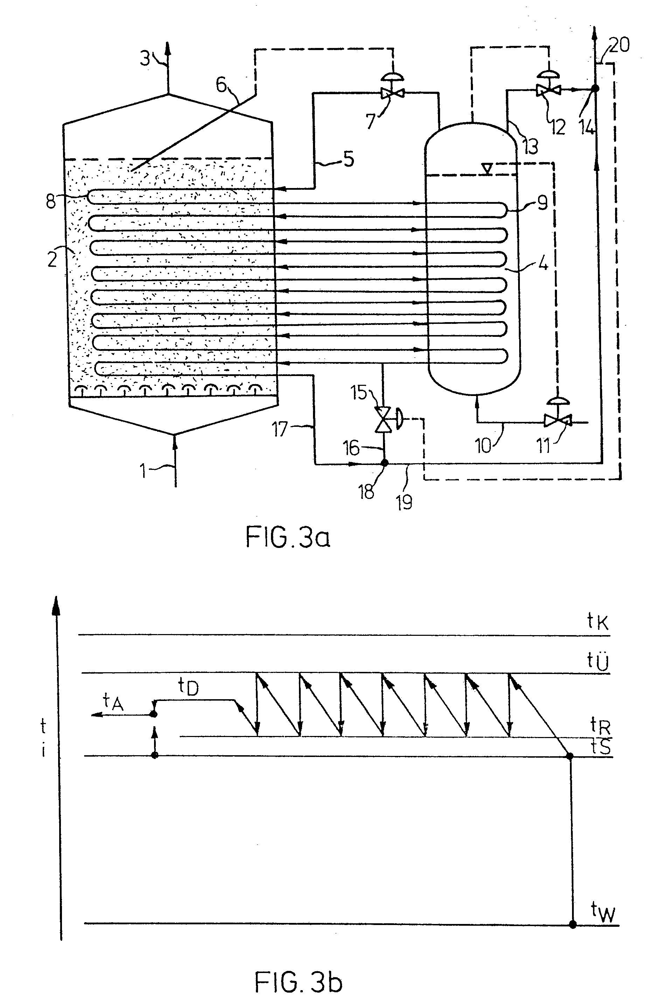

Das vorgeschlagene System besteht aus im Reaktionsraum oder den Produktwegen angeordneten Überhitzungsheizflächen und einem außerhalb des Reaktionsraumes oder der Produktwege angeordneten, indirekt aufgeladenem Gleichdruck-Wärmespeicher, wie es in Fig. 3a dargestellt ist. Darin bedeuten:

1 Eintritt des Reaktionsgases
2 Wirbelbett-Reaktor
3 Austritt des Reaktionsgases
4 Wärmespeicher

5 Zuleitung für Kühldampf
6 Temperaturfühler
7 Temperatur-Regelventil
8 Überhitzerstufen im Wirbelbett
9 Rückkühlstufen im Wärmespeicher
10 Speisewasserzuführung zum Wärmespeicher
11 Stand-Regelventil für Speisewasser
12 Druck-Regelventil
13 Abführung von Überschußdampf
14 Mischer
15 Temperatur-Regelventil
16 Bypassleitung
17 Ableitung für Kühldampf
18 Mischer
19 Verbindungsleitung zwischen Mischer 18 und 14
20 Leitung zum Dampfnetz.

Die Funktionsweise ist wie folgt:

Aus dem Wärmespeicher 4 wird über Leitung 5, geregelt durch Temperaturfühler 6 und Ventil 7, Sattdampf entnommen und in mehreren Folgen jeweils in einer der im Wirbelbett 2, mindestens 4, vorzugsweise 6—12, besonders bevorzugt 8—10, angeordneten Überhitzerstufen 8, überhitzt und anschließend in einer der im Wärmespeicher 4 angeordneten Rückkühlstufen 9 zurückgekühlt.

Gleichgewicht zwischen der dem Speicher 4 in Form von Dampf für die Kühlung des Wirbelbettes entzogenen Wärme und der indirekt über die Rückkühlstufen 9 in den Speicher 4 zurückgeführten Wärme ist dann vorhanden, wenn die Summe der Enthalpiedifferenzen des in den Rückkühlstufen 9 zurückgekühlten Dampfes gleich der Enthalpiedifferenz zwischen dem über Leitung 10 zugeführten Speisewasser und dem über Leitung 5 entnommenen Dampf ist.

Dieses Gleichgewicht wird erfindungsgemäß unabhängig von den gegebenen oder gewählten Dampfzuständen über die Anzahl der Überhitzungs- und Rückkühlfolgen eingestellt.

Über die Anzahl der Überhitzungs- und Rückkühlfolgen lassen sich jedoch auch beliebige andere Verhältnisse größer als 1 einstellen. Durch diese erfindungsgemäße Maßnahme wird im Wärmespeicher 4 immer mehr Dampf erzeugt als ihm zu Kühlzwecken entnommen wird.

Je größer das Verhältnis der Summe der Enthalpiedifferenzen des in den Rückkühlstufen zurückgekühlten Dampfes zur Enthalpiedifferenz zwischen Dampf und Speisewasser gewählt wird, um so elastischer reagiert das System auf schwankende abzuführende Wärmemengen.

Der zur Kühlung nicht benötigte Überschußdampf wird über die Leitung 13 druckgeregelt durch Ventil 12 abgegeben.

Um den über Leitung 20 abgegebenen Nutzdampf in dem gewünschten Überhitzungsgrad zu erhalten, wird ein Teil der zur Kühlung des Wirbelbettes verwendeten Dampfmenge nach der letzten der Rückkühlstufen 9 temperaturgeregelt durch Ventil 15 in der letzten der Überhitzerstufen 8 so erhitzt, daß sich nach Zusammenführung der Leitungen 16 und 17 im Mischer 18 und Weiterleitung über Leitung 19 durch Zusammenführen des Kühldampfes mit dem überschüssigen Sattdampf der gewünschte Zustand ergibt.

Die auf dem vorbeschriebenen Wege durchlaufenen Dampfzustände sind in Fig. 3b dargestellt.

Darin bedeuten:

tw = Speisewassertemperatur
ts = Sattdampftemperatur
tü = Überhitzungstemperatur
tk = Temperatur des Wirbelbettes
tD = Temperatur nach der letzten Überhitzerstufe
tA = Temperatur des abgegebenen Nutzdampfes

i = Enthalpie bei den jeweiligen Temperaturen.

Das Diagramm zeigt auch deutlich, daß durch Wahl der Anzahl der Überhitzungs- und Rückkühlfolgen der Temperaturbereich des zur Kühlung verwendeten Dampfes beliebig gewählt werden kann.

Insbesondere ist bei kleiner Enthalpiedifferenz in den Stufen bei entsprechender Vergrößerung der Anzahl der Stufen eine weitestgehende Thermostatisierung von Reaktionsprozessen möglich.

Das erfindungsgemäße Verfahren soll durch die folgenden Beispiele noch näher erläutert werden.

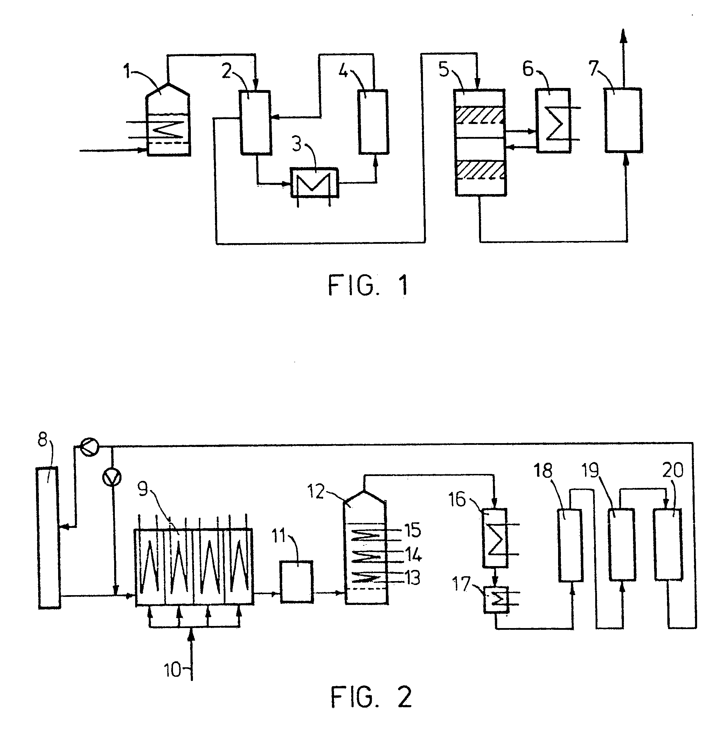

Beispiel 1
(vergl. Fig. 1)

In die Anströmkammer eines Fließbettes (1) strömten 23 000 Nm³ Schwefelbrennergas (durch Verbrennen von Schwefel mit Luft hergestelltes Gas) mit 12,3 Vol.-% $SO_2$ mit einer Temperatur von 330°C. In einem Fließbett von 6,4 m Durchmesser wurde eine auf den Leerraum bezogene Normgeschwindigkeit von 20 Ncm/sec eingestellt. Die Fließbetthöhe im ruhenden Zustand beträgt 100 cm, im fluidisiertem Zustand ca. 115 cm. Das Fließbett wurde mittels waagerecht eingebauter, gleichmäßig verteilter Rohre, durch die Dampf floß, auf 475°C thermostatisiert. Der Dampf trat mit ca. 200°C in mehrere Rohrschlangen von unten ein und mit cal 420°C oben aus. Die Überhitzungswärme des Dampfes wurde in einer Dampftrommel mittels Heißdampfkühler abgegeben und hierbei pro Stunde ca. 3,2 t Dampf von 6 bar als Nutzwärme gewonnen. Das $SO_2$ wurde im Fließbett zu 92% umgesetzt. Das Gas aus dem Reaktor wurde wie bekannt im Kreuzgaswärmetauscher (2) und einem Luftvorwärmer oder Speisewasservorwärmer (3) abgekühlt und der Zwischenabsorption (4) zugeleitet. Nach Wiederaufwärmen im Kreuzgaswärmetauscher (2) wurde am Nachkontakt das rest-

liche $SO_2$ bis zu einem Gesamtumsatz von über 99,6 bis 99,8% umgesetzt. In der Anlage wurden 310 t 98%ige Schwefelsäure pro Tag produziert.

### Beispiel 2
### (vgl. Fig. 2)

In einer Luftverflüssigungsanlage (8) wurde reiner Sauerstoff gewonnen, der im Ofen (9) zur Verbrennung von Schwefel eingesetzt wurde. Aus dem Ofen wurden nach mehrmaliger Zugabe von Schwefel (10) 3000 $Nm^3$ Gas entnommen, die ca. 60 Vol.-% $SO_2$ und ca. 39 Vol.-% $O_2$ enthielten. Dieses Gas wurde, nachdem es mit ECO (11) auf ca. 200°C abgekühlt wurde, in die Anströmkammern des Fließbettes (12) geleitet. In dem Fließbett mit 2,5 m Durchmesser waren drei Wärmetauscherregister übereinander angeordnet, im untersten (13) wurde Wasser bei 32 bar verdampft, im mittleren (14) und oberen Register (15) wurde Wärme durch Überhitzen von Dampf abgeführt. Das Fließbett hat eine Höhe von ca. 150 cm. Im obersten Drittel wurde eine Temperatur von 450°C eingestellt, im Bereich der beiden unteren Register wurde bei Temperaturen von 480 bis 550°C gearbeitet. Nach Abkühlen des Gases nach einer Umsetzung von 90 bis 97% des $SO_2$ wurden in einem Überhitzer (16) und einem ECO (17) in einer 3stufigen Absorption zunächst 60—65%iges Oleum (18), dann 20—35%iges Oleum (19) und zuletzt 98%ige Schwefelsäure (20) hergestellt. Der größte Teil des Gases, das die Zwischenabsorption verließ, wurde über ein Druckerhöhungsgebläse (21) der Beschickung des S-Verbrennungsofens direkt wieder beigemischt, ein kleinerer Teilstrom (22) wurde in die Luftverflüssigungsanlage (8) eingespeist.

Die Anlage produzierte ca. 150—160 tato $SO_3$. Es wurde mehr Energie gewonnen, als für die angeschlossene Luftverflüssigungsanlage benötigt wurde.

### Patentansprüche

1. Verfahren zur Herstellung von Schwefeltrioxid nach dem Kontaktverfahren unter der Verwendung der Fließbettechnik, wobei $SO_2$-haltige Gase in einem einstufigen Fließbett aus Kontaktmaterial mit sauerstoffhaltigen Gasen zu Schwefeltrioxid umgesetzt werden und die Kontaktmasse über Wärmetauscher thermostatisiert wird, dadurch gekennzeichnet, daß die Höhe des einstufigen Fließbettes im fluidisierten Zustand ca. 0,1 bis 2 m, die mittlere Korngröße der Kontaktmasse zwischen ca. 0,4 bis 2 mm, die Gasgeschwindigkeit im leeren Reaktorraum zwischen ca. 0,1 bis 0,6 $m_N/sec$, die Geschwindigkeit nach dem Anströmboden vor Berührung mit dem Kontaktkorn kleiner/gleich 9 $m_N/sec$, beträgt, wobei die $SO_2$-haltigen Gase mit einer Temperatur von etwa 20°C bis 700°C und einem Gehalt von bis zu 66,7% Schwefeldioxid zu über 90% zu Schwefeltrioxid umgesetzt werden, die $SO_3$-haltigen Reaktionsgase einer Zwischenabsorption zugeführt und die von Schwefeltrioxid befreiten Gase in einem ein- oder zweistufigen Kontakt weiter umgesetzt werden und zur Thermostatisierung als Kühlmedium Wasserdampf aus einem vom Reaktionsraum getrennt angeordneten, mit siedendem Wasser gefüllten Gleichdruck-Wärmespeicher im Zwangsdurchlauf in mehreren Folgen in den Reaktionsraum geführt, dort überhitzt und jeweils anschließend im Wärmespeicher durch indirekte Verdampfungskühlung rückgekühlt wird, wobei im Wärmespeicher der Wasserdampf auf gleichem Druck gehalten wird, indem die Anzahl der Überhitzungs- und Rückkühlfolgen so gewählt wird, daß das Verhältnis der Summe der Enthalpiedifferenzen der Rückkühlstufen zur Enthalpiedifferenz zwischen Sattdampf und zugeführten Speisewasser mindestens 1,1 beträgt.

2. Verfahren nach Anspruch 1, dadurch gekennzeichnet, daß die Höhe des Fließbettes im fluidisierten Zustand zwischen ca. 0,6 bis ca. 1,3 m liegt.

3. Verfahren nach Anspruch 1 oder 2, dadurch gekennzeichnet, daß die mittlere Korngröße der eingesetzten Kontaktmasse zwischen ca. 0,7 und ca. 1,3 mm liegt.

4. Verfahren nach einem oder mehreren der Ansprüche 1 bis 3, dadurch gekennzeichnet, daß die Gasgeschwindigkeit im leeren Reaktorraum zwischen 0,15 bis ca. 0,35 $m_N/sec$ beträgt.

5. Verfahren nach einem oder mehreren der Ansprüche 1 bis 4, dadurch gekennzeichnet, daß die Gasgeschwindigkeit nach dem Anströmböden vor der Berührung mit dem Kontaktkorn kleiner/gleich 3 $m_N/sec$ ist.

### Claims

1. Process for the preparation of sulphur trioxide by the contact process employing the fluidised bed technique, wherein $SO_2$-containing gases are reacted with oxygen-containing gases in a single-stage fluidised bed of catalyst material to give sulphur trioxide and the temperature of the catalyst mass is controlled by heat exchangers, characterised in that the height of the single-stage fluidised bed in the fluidised state is about 0,1 to 2 m, the average particle size of the catalyst mass is between about 0.4 and 2 mm, the gas velocity in the empty reactor chamber is between about 0.1 and 0.6 $m_N/sec$, the velocity after the bottom of the inlet chamber has been reached and before contact with the catalyst particles is less than or equal to 9 $m_n/sec$, wherein over 90% of the $SO_2$-containing gases, which have a temperature of about 20°C to 700°C and a content of sulphur dioxide of up to 66,7%, are converted into sulphur trioxide, the $SO_3$-containing reaction gases are fed to an intermediate absorption step and the gases freed from sulphur trioxide are reacted within a single stage or two stage catalyst and for the control of temperature steam from a constant pressure heat accumulator which is arranged separately from the reaction chamber and is filled with boiling water is forced, as the cooling medium, through the reaction chamber, in several sequences, is superheated therein and in each case subsequently recooled in the heat accumulator by indirect evaporation cooling, the steam being kept at a constant pressure in the heat accumulator by choosing the number of superheating and recooling sequences such that the ratio of the sum of enthalpy differences of the recooling stages to the enthalpy difference between the saturated steam and the feed water supplied is at least 1.1

2. Process according to claim 1, characterised in that the height of the fluidised bed in the fluidised state is between about 0.6 and about 1.3 m.

3. Process according to claim 1 or 2, characterised in that the average particle size of the catalyst mass used is between about 0.7 mm and about 1.3 mm.

4. Process acording to one or more of claims 1 to 3, characterised in that the gas velocity in the empty reaction chamber is between about 0.15 and about 0.35 $m_N$/sec.

5. Process according to one or more of claims 1 to 4, characterised in that the velocity of the gas after reaching the bottom of the inlet chamber and before making contact with the catalyst particles is less than or equal to 3 $m_N$/sec.

## Revendications

1. Procédé pour la fabrication de trioxyde de soufre selon le procédé de contact avec utilisation de la technique en lit fluidisé, où les gaz contenant $SO_2$ réagissent avec des gaz contenant de l'oxygène dans un lit fluidisé de catalyseur en un étage en trioxyde de soufre et la masse catalytique est thermostatée par des échangeurs de chaleur, caractérisé en ce que la hauteur du lit fluidisé à un étage est d'environ 0,1 à 2 m à l'état fluidisé, la granulométrie moyenne de la masse catalytique est comprise entre environ 0,4 et 2 mm, la vitesse du gaz dans l'espace vide du réacteur est comprise entre environ 0,1 et 0,6 $m_N$/s, la vitesse après le plateau d'entrée avant le contact avec le grain de catalyseur est inférieure ou égale à 9 $m_N$/s, les gaz contenant $SO_2$ à une température d'environ 20 à 700°C et d'une teneur en dioxyde de soufre jusqu'à 66,7% étant convertis à plus de 90% en trioxyde de soufre, les gaz de réaction contenant $SO_3$ sont envoyés à une absorption intermédiaire et les gaz débarrassés de trixoyde de soufre sont encore mis à réagir dans un catalyseur à 1 ou 2 étages et on envoie comme milieu réfrigérant pour la thermorégulation de la vapeur d'eau d'un accumulateur thermique équipression rempli d'eau bouillante, séparé de la zone de réaction, en circulation forcée en plusieurs cycles dans la zone de réaction, elle y est surchauffée et ensuite chaque fois refroidie en retour dans l'accumulateur thermique par refroidissement indirect par évaporation, la vapeur étant maintenue dans l'accumulateur thermique à la même pression, le nombre des cycles de surchauffage et de refroidissement en retour étant choisi de telle sorte que le rapport de la somme des différences d'enthalpie des étages de refroidissement en retour à la différence d'enthalpie entre la vapeur saturée et l'eau d'alimentation introduite étant d'au moins 1,1.

2. Procédé selon la revendication 1, caractérisé en ce que la hauteur du lit fluidisé à l'état fluidisé est comprise entre 0,6 et environ 1,3 m.

3. Procédé selon la revendication 1 ou 2, caractérisé en ce que la granulométrie moyenne de la masse catalytique utilisée est comprise entre environ 0,7 et environ 1,3 mm.

4. Procédé selon une ou plusieurs des revendications 1 à 3, caractérisé en ce que la vitesse du gaz dans l'espace vide du réacteur est comprise entre environ 0,15 et environ 0,35 $m_N$/s.

5. Procédé selon une ou plusieurs des revendications 1 à 4, caractérisé en ce que la vitesse du gaz après le plateau d'entrée avant le contact avec le grain de catalyseur est inférieure ou égale à 3 $m_N$/s.

FIG. 1

FIG. 2

FIG. 3a

FIG. 3b